# EUROPÄISCHE PATENTSCHRIFT

(11) **EP 2 882 962 B1**
(45) Veröffentlichungstag und Bekanntmachung des Hinweises auf die Patenterteilung: **12.10.2016**
(21) Anmeldenummer: 13759144.2
(22) Anmeldetag: 12.08.2013
(51) Int. Cl.: F03D 15/00

(54) **ROTORWELLE FÜR EINE WINDTURBINE**
ROTOR SHAFT FOR A WIND TURBINE
ARBRE DE ROTOR DESTINÉ À UNE TURBINE ÉOLIENNE

(30) Priorität: 10.08.2012 DE 102012214339
(43) Veröffentlichungstag der Anmeldung: 17.06.2015
(73) Patentinhaber: AE Rotor Holding B.V., 7559 ST Hengelo (NL)
(72) Erfinder: BEHRENDT, Ute, 19063 Schwerin (DE)
(74) Vertreter: Bradler, Carola Romana
(86) Internationale Anmeldenummer: PCT/EP2013/066828
(87) Internationale Veröffentlichungsnummer: WO 2014/023850

(56) Entgegenhaltungen:
- EP-A1- 2 154 367
- WO-A1-2012/052022
- WO-A2-2012/095140
- DE-A1- 10 015 287

## Beschreibung

Die Erfindung betrifft eine Rotorwelle für eine Windturbine. Die Rotorwelle umfasst dabei einen Flansch zur Aufnahme einer Rotationsbewegung aus einer Nabe eines Rotors der Windturbine, einen Abtrieb zur Ableitung einer Rotationsbewegung, zum Beispiel in ein Getriebe, einen Schaft und einen Zwischenabschnitt. Der Flansch ist dabei über den Zwischenabschnitt mit dem Schaft, und der Schaft ist wiederum mit dem Abtrieb verbunden. Eine solche Rotorwelle ist im Wesentlichen hohl ausgebildet. Auf der Außenfläche des Schaftes befindet sich eine Lagerfläche zur Abstützung des Schafts auf einem Hauptlager der Windturbine. Die Lagerfläche ist in einer Axialrichtung mit einem wirksamen Lagerabstand von einer Flanschfläche des Flansches beabstandet und an einem an dem Zwischenabschnitt angrenzenden Bereich des Schafts angeordnet.

Eine solche Rotorwelle einer Windturbine ist aus der Europäischen Patentschrift EP 2 202 013 B1 bekannt, wobei es sich hierbei um eine Rotorwelle handelt, die durch Extrudieren hergestellt ist. Bei diesem Herstellungsverfahren werden hoch feste und teure Matrizen verwendet, und auch das Ausgangsmaterial muss sehr hohen Qualitätsanforderungen gerecht werden. Dadurch ist diese Rotorwelle sehr teuer und es ist möglich, dass sich ein ungleichmäßiges Materialgefüge ausbildet, welches wiederum unter Belastung zu ungewollten Spannungsspitzen führen kann.

Weiterhin sind Rotorwellen von Windturbinen aus dem Stand der Technik bekannt, die durch Schmieden gefertigt werden. Auch dieser Herstellungsvorgang ist äußerst aufwändig und kostenintensiv. Ferner ist eine weikere Rotorwelle nach dem Stand der Technik aus WO2012/095140 bekannt.

Es ist eine Aufgabe der Erfindung, eine Rotorwelle für eine Windturbine anzugeben, welche die Nachteile des Stands der Technik vermeidet. Insbesondere soll die Rotorwelle preisgünstig hergestellt werden können und trotzdem die hohen Anforderungen in der Windenergie hinsichtlich Qualitätsgüte und Homogenität des Werkstoffs erfüllen.

Die Aufgabe wird erfindungsgemäß mit den Merkmalen des Anspruchs 1 gelöst, indem die Rotorwelle im Wesentlichen aus einem metallischen Gusswerkstoff besteht und eine in einer Radialrichtung innen- und stirnseitig liegende Innenfläche und eine außen liegende Außenfläche aufweist. Die eigentliche, rohrförmige Innenfläche der Rotorwelle geht kontinuierlich in die Stirnfläche des Zwischenabschnitts über und es wird im Folgenden nur von der "Innenfläche" gesprochen, welche innenseitige und auch eine stirnseitige Komponente beinhaltet. Zum einen ist die Außenfläche des Zwischenabschnitts in einer durch Radialrichtung und Axialrichtung aufgespannten Schnittebene, insbesondere mit mindestens einem Außenradius, konkav gekrümmt, und zum anderen ist die Innenfläche des Zwischenabschnitts in der Schnittebene, insbesondere mit mindestens einem Innenradius, konvex gekrümmt ausgebildet. Dabei verlaufen die Außenfläche und die Innenfläche des Zwischenabschnitts im Wesentlichen kontinuierlich. Denkbar ist auch, dass die Geometrie der Innenfläche und Außenfläche nicht als Radius sondern auch als beliebige Kraftfluss optimierende Funktion (zum Beispiel eine hyperbolische Funktion) ausgebildet ist. Zudem sind der Zwischenabschnitt, bzw. die Radien des Zwischenabschnitts derart geometrisch ausgebildet, dass eine maximale Spannung in jedem Punkt der Rotorwelle immer unter der für den Gusswerkstoff definierten Streckgrenze (Rₚ, 0,2) bzw. bauteilbezogen unter der zulässigen Spannungsgrenzen liegt. Die Streckgrenze wird auch als 0,2%-Dehngrenze bezeichnet, also die Spannung, bis zu der der Werkstoff bei einachsiger und momentenfreier Zugbeanspruchung eine dauerhafte plastische Verformung von 0,2% zeigt. Die maximale Spannung im Bauteil wird mithilfe eines zur Zulassung der Rotorwelle angegebenen Lastprofils berechnet. Dieses Lastprofil ist hierbei die entscheidende technische Größe, da diese in einem Zulassungsverfahren, auch genannt Zertifizierung, eines jeden Bauteils der Windturbine zu Grunde gelegt wird. Ein solches Lastprofils umfasst zum Beispiel Dauerbelastung bei Betriebslast, extreme Lasten bei starken Winden oder bei den so genannten 50-Jahresböen, welche statistisch gesehen nur alle 50 Jahre auftreten. Somit gibt es für jede Windturbine bzw. für jede Komponente einer Windturbine ein der Zertifizierung zu Grunde gelegtes Lastprofil. Ein Bauteil erhält nur dann eine Zulassung, wenn eine maximale Spannung unter Belastung mit selbigem Lastprofil unter einem gewissen Wert, insbesondere der Streckgrenze bleibt. Dieser Test zur Zulassung eines Bauteils erfolgt an dem Computer, das heißt, dass ein Modell des zuzulassenden Bauteils unter Einbeziehung des genannten Lastprofils berechnet wird. Selbstverständlich ist denkbar, dass bei dieser Berechnung auch noch Sicherheiten angenommen werden, insbesondere ist ein Sicherheitsfaktor von 1,1 sinnvoll. Somit muss das 1,1-fache der berechneten maximalen Spannung in der Rotorwelle unter der Streckgrenze des gewählten Gusswerkstoffs liegen. Selbstverständlich sind auch andere Werte für den Sicherheitsfaktor denkbar, insbesondere 1,2 oder ein anderer Wert, welcher bei der Zertifizierung Anwendung findet.

Die folgende Tabelle führt mögliche Werkstoffe, deren Zugfestigkeit, Streckgrenze (Rₚ, 0,2), Streckgrenze bei Erzeugungsdicke und deren Werte bei einem Sicherheitsfaktor von 1,1 an. Weitere finden sich in der Norm DIN-EN 1563:

| Werkstoff | Zugfestigkeit [N/mm²] | Streckgrenze Max. [N/mm²] | Streckgrenze Min. [N/mm²] |
|---|---|---|---|
| EN-GJS-350-xxx | 350 ... 320 | 220 | 220 |
| Inkl. Sicherheit: 1,1 | | 200 | 200 |
| EN-GJS-400-xxx | 400 ... 370 | 240 | 230 |
| Inkl. Sicherheit: 1,1 | | 218 | 209 |
| EN-GJS-600-xxx | 600 ... 550 | 370 | 360 |
| Inkl. Sicherheit: 1,1 | | 336 | 327 |

Durch genau diese Ausbildung der Innen- und Außenfläche der Rotorwelle wird erstmalig ermöglicht, dass Kräfte in geordneter und homogener Weise von dem Flansch hinüber in das Lager und in den Abtrieb abgeleitet werden können, und gleichzeitig ein Gusswerkstoff verwendet werden kann.

Aufgrund möglicher Inhomogenität, zum Beispiel Lunker oder Poren, eines Gusswerkstoffs in einem Bauteil und/oder auch durch die Geometrie des Bauteils an sich, treten in hochbelasteten, gegossenen Bauteile unvorhersehbare Spannungsspitzen an unterschiedlichen Positionen auf. Um also ein durch Schmieden hergestelltes, hoch belastetes Maschinenbauteil durch Gießen herstellen zu können, muss dieses derart konstruiert werden, dass die Schwächung durch die Inhomogenität des Gusswerkstoffs und/oder durch die Geometrie an sich durch eine angepasste Geometrie kompensiert wird.

Es hat sich überraschenderweise gezeigt, dass die aus dem Stand der Technik bekannten Konstruktionsprinzipien für Gusswerkstoff und insbesondere für Rotorwellen nicht für eine Rotorwelle einer Windturbine aus Gusswerkstoff anwendbar sind. In langwierigen Versuchen ergab sich, dass eine Rotorwelle für eine Windturbine gemäß den gängigen Konstruktionsprinzipien den speziell hohen Lasten im Betrieb einer Windturbine nicht gewachsen wäre.

In einem Ausführungsbeispiel der Erfindung wird angeführt, dass der Zwischenabschnitt der Rotorwelle einen ringsymmetrischen, in Axialrichtung ausgebildeten Vorsprung zum Abstützen des Flansches aufweist. Dieser Vorsprung ist an einer dem Abtrieb abgewandten Stirnseite der Rotorwelle am Zwischenabschnitt angeordnet und bildet gleichzeitig einen Teil der Innenfläche. Dieser Vorsprung hat die wichtige Funktion, den oberen Teil des Zwischenabschnitts zu stützen und zu versteifen, so dass sich eine gleichmäßige Spannungsverteilung im Bereich der Krafteinleitung ergeben kann bzw. Spannungen nicht in gewünschter Weise, zum Beispiel an der Außenfläche des Zwischenabschnitts, konzentrieren können.

Es hat sich überraschenderweise gezeigt, dass durch diese Hinterfütterung - also die Steigerung der Wandstärke an der Last abgewandten Seite bzw. Innenseite - eine Spannungserhöhung durch Kerbwirkung an der Außenseite effektiv reduziert wird. Es sei angemerkt, dass dieses Ausführungsbeispiel auch als unabhängige Erfindung im Zusammenhang mit einer Rotorwelle aus dem Stand der Technik anzusehen ist. Vorzugsweise wird die Rotorwelle aus dem Stand der Technik mit dem konkav Außenradius und dem konvexen Innenradius wie oben beschrieben und mit dem Vorsprung kombiniert.

Gemäß einer weiteren Ausführungsform der Erfindung weist der Vorsprung in Axialrichtung eine Tiefe gegenüber der Flanschfläche auf, wobei ein Verhältnis des Lagerabstands zu der Tiefe des Vorsprungs zwischen 12 und 4, bevorzugt zwischen 8 und 4, weiter optimiert zwischen 6 und 4,5, und besonders bevorzugt zwischen 5,5 und 4,6 liegt. Bei einer derartigen Ausprägung des Vorsprungs zeigen sich die Vorteile desselbigen hinsichtlich günstigem Kraftfluss, Hebelwirkung, Versteifung und Stützung des Zwischenabschnitts und des Flansches besonders deutlich.

In vorteilhafter Weise kann der Vorsprung im Wesentlichen kontinuierlich über mindestens einen Radius in die Flanschfläche übergehen. Dadurch wird bewirkt, dass die Einleitung der Kräfte aus dem Flansch in den Vorsprung des Zwischenabschnitts besonders gleichmäßig erfolgt.

Weiterhin kann der Vorsprung auch über eine konusförmige Ringfläche in die Flanschfläche des Flansches übergehen, wobei gegebenenfalls auch ein Radius - wie voran stehend beschrieben - zusätzlich Verwendung finden kann. Durch diese Ringfläche wird sichergestellt, dass der Vorsprung ohne versteifende und Spannungsspitzen fördernde Materialanhäufung ausgebildet ist.

Gemäß einer weiteren Ausführungsform schließt die Ringfläche in der Schnittebene einen Winkel mit einer Achse der Rotorwelle ein, welcher zwischen 50° Grad und 20° Grad, bevorzugt zwischen 45° Grad und 25° Grad, und besonders bevorzugt zwischen 40° Grad und 35° Grad liegt. Auf diese Weise wird erreicht, dass der Vorsprung nicht zu groß ausgebildet ist, und neue Spannungsspitzen provoziert werden, und wiederum auch nicht zu klein, und die Stützwirkung nur unzureichend ist.

In einer weiteren Ausführungsform der Erfindung weist die Krümmung der Außenfläche zwei oder mehrere Außenradien auf, wobei diese vorzugsweise unterschiedlich ausgebildet sind und ineinander übergehen.

Dabei ist denkbar, dass ein erster Radius an der Außenfläche in der Nähe der Lagerfläche angeordnet ist und ein zweiter Radius in unmittelbarer Nähe des Flansches liegt, wobei der erste Radius größer als der zweite Radius ist. Dies bewirkt, dass der Kraftfluss zwischen Flansch und Schaft der Rotorwelle relativ konstant ausgeprägt ist, und Spannungsspitzen, insbesondere an der Oberfläche, vermieden bzw. reduziert werden.

Der Kraftfluss in dem Zwischenabschnitt wird auch dadurch verbessert, indem die konvexe Krümmung der Innenfläche mindestens zwei oder mehrere Innenradien umfasst.

Zudem kann ein erster Innenradius, der im Wesentlichen auf der Innenfläche in einem Bereich angeordnet ist, der mit einem Bereich der in Radialrichtung außen liegenden Lagerfläche korrespondiert, größer sein als ein zweiter Innenradius, der auf einer Stirnseite der Innenfläche angeordnet ist.

Eine unabhängige Ausführungsform der Erfindung offenbart, dass eine Wandstärke des Zwischenabschnitts, ausgehend von einer maximalen Wandstärke bis zu einer Wandstärke am Übergang von Zwischenabschnitt in den Flansch im Wesentlichen kontinuierlich abnimmt. Dies wird erreicht, indem der Innenradius bzw. die Innenradien der Innenfläche und der Außenradius bzw. die Außenradien die Außenfläche dementsprechend ausgebildet sind. Die maximale Wandstärke kann dabei entweder in unmittelbarer Nähe des Schaftes oder auch im Wesentlichen in einem mittleren Abschnitt des Zwischenabschnitts angeordnet sein.

Das voranstehenden Merkmal erzeugt ein besonders gutes Ergebnis hinsichtlich einer optimalen Kraftflussleitung, indem die Wandstärke des Zwischenabschnitts ausgehend von einer Wandstärke am Übergang von dem Schaft in den Zwischenabschnitt zuerst bis auf die maximale Wandstärke im Wesentlichen kontinuierlich zunimmt, und dann bis zu einer bestimmten geringeren Wandstärke am Übergang von Zwischenabschnitt in den Flansch im Wesentlichen kontinuierlich abnimmt. Durch die Reduzierung der Wandstärke in Richtung des Lagers und/oder in Richtung des Flansches wird ein gleichmäßiges Verformungsverhalten des Zwischenabschnitts erreicht.

In vorteilhafter Weise können die Innenfläche und die Außenfläche des Zwischenabschnitts im Wesentlichen parallel verlaufend ausgebildet sein. Somit wird erreicht, dass der Zwischenabschnitt mittels geeigneter Materialprüfungsverfahren, zum Beispiel Prüfung mittels Ultraschall, hinsichtlich Materialfehler untersucht werden kann.

Im Gegensatz zu Konstruktionsanweisungen aus dem Stand der Technik, insbesondere aus der Konstruktionslehre, hat sich gezeigt, dass es vorteilhaft für den Kraftfluss ist, wenn der wirksame Außendurchmesser der Außenfläche des Zwischenabschnitts an einem an dem Zwischenabschnitt angrenzenden Bereich des Schafts im Wesentlichen dem Lagerdurchmesser entspricht oder nur leicht übertrifft.

Eine in diesem Zusammenhang vorteilhafte Ausführungsform offenbart, dass auf der Außenfläche des Zwischenabschnitts, direkt an der Lagerfläche ein ringsymmetrischer, axial wirksamer Anschlag für ein Lager vorgesehen ist. Dieser Anschlag ist derart ausgebildet, dass er in Radialrichtung den wirksamen Außendurchmesser der Außenfläche des Zwischenabschnitts überragt. Somit wird ermöglicht, dass ein Anschlag für das Lager bereitgestellt wird, aber gleichzeitig dieser Anschlag den Kraftfluss von Zwischenabschnitt in den Schaft der Rotorwelle nicht negativ beeinflusst, insbesondere nicht die Bildung von Spannungsspitzen ermöglicht.

Eine weitere Ausführungsform offenbart, dass der Anschlag möglichst schlank ausgebildet ist. Dies hat die vorteilhafte Wirkung, dass der Anschlag keinen Einfluss auf den Kraftfluss zwischen Zwischenabschnitt und Schaft hat.

Die Rotorwelle ist vorzugsweise derart ausgebildet, dass ein Verhältnis des Flanschdurchmessers zum Lagerabstand zwischen 4,5 und 2,5, bevorzugt zwischen 4 und 3, und besonders bevorzugt zwischen 3,3 und ca. 3,1 liegt.

Die Erfindung umfasst auch eine Windturbine, wobei ein Maschinenhaus drehbar auf einem Turm gelagert ist, und in dem Maschinenhaus eine Rotorwelle gemäß eines oder mehrerer der vorangestellten Ausführungsbeispiele drehbar gelagert vorgesehen ist.

Es sei an dieser Stelle betont, dass die einzelnen Ausführungsbeispiele und Merkmale der einzelnen Ausführungsbeispiele auch untereinander miteinander kombiniert werden können, und es nicht zwingend erforderlich ist, die einzelnen Merkmale in der beschriebenen Reihenfolge miteinander zu kombinieren. Weitere Einzelheiten der Erfindung gehen aus den Zeichnungen anhand der Beschreibung hervor.

In den Zeichnungen zeigt
- Fig. 1: eine Windturbine,
- Fig. 2: einen Längsschnitt einer Rotorwelle aus einem Gusswerkstoff gemäß einer ersten Ausführungsform,
- Fig. 3: eine Detailansicht der Rotorwelle gemäß Fig. 2,
- Fig. 4: eine perspektivische Ansicht auf die Rotorwelle gemäß Fig. 2,
- Fig. 5: eine perspektivische Ansicht auf eine Rotorwelle in einer zweiten Ausführungsform,
- Fig. 6: einen Längsschnitt auf die Rotorwelle gemäß Fig. 5, und
- Fig. 7: eine Detailansicht der Rotorwelle gemäß Fig. 5.

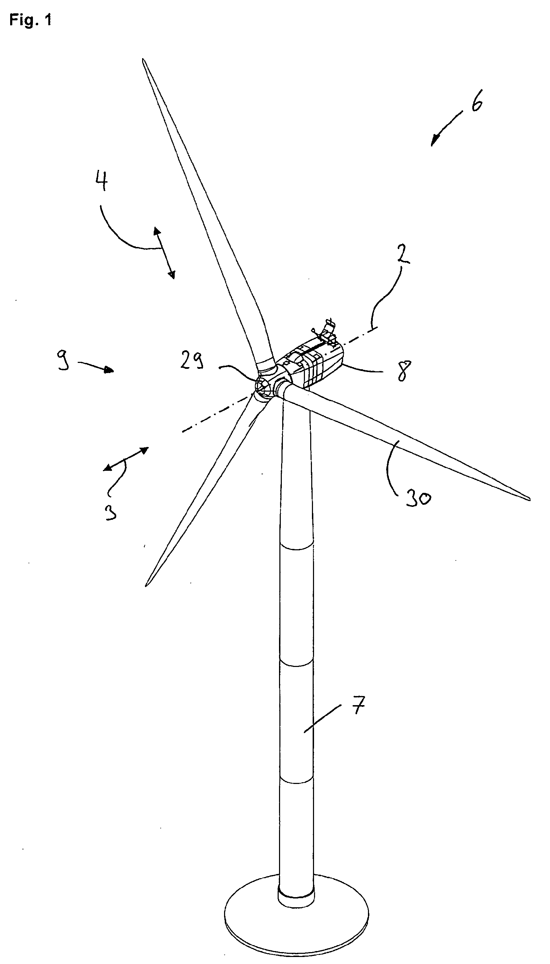

In Fig. 1 ist eine Windturbine 6 gezeigt, welche einen Turm 7, ein darauf gelagertes Maschinenhaus 8 und einen darin drehbar gelagerten Rotor 9 umfasst. Um bei Winden aus unterschiedlichen Richtungen die Windturbine 6 betreiben zu können, ist das Maschinenhaus 9 mit einer Windnachführung ausgestattet. Das Maschinenhaus 9 weist einen Maschinenrahmen, auf welchem eine Rotorwelle über ein Rotorlager drehbar gelagert ist. An einem Flansch der Rotorwelle ist eine Nabe 29 angeschraubt, welche wiederum die Rotorblätter 30 trägt.

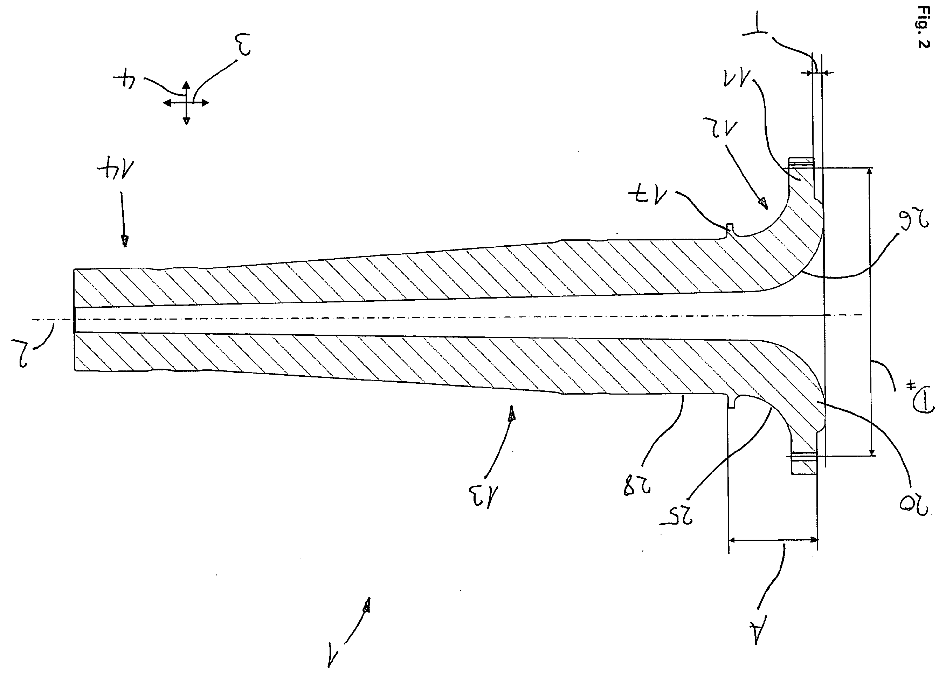

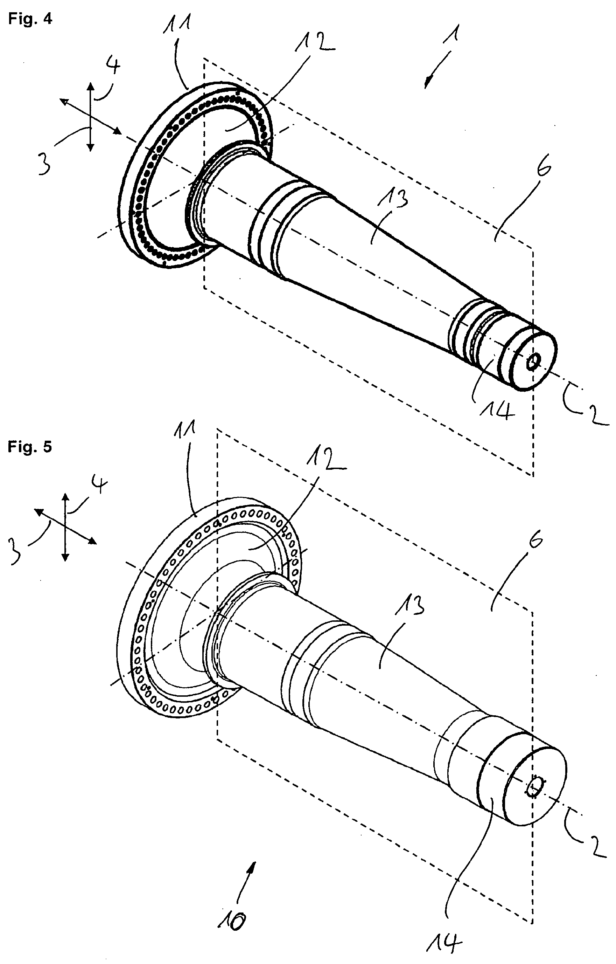

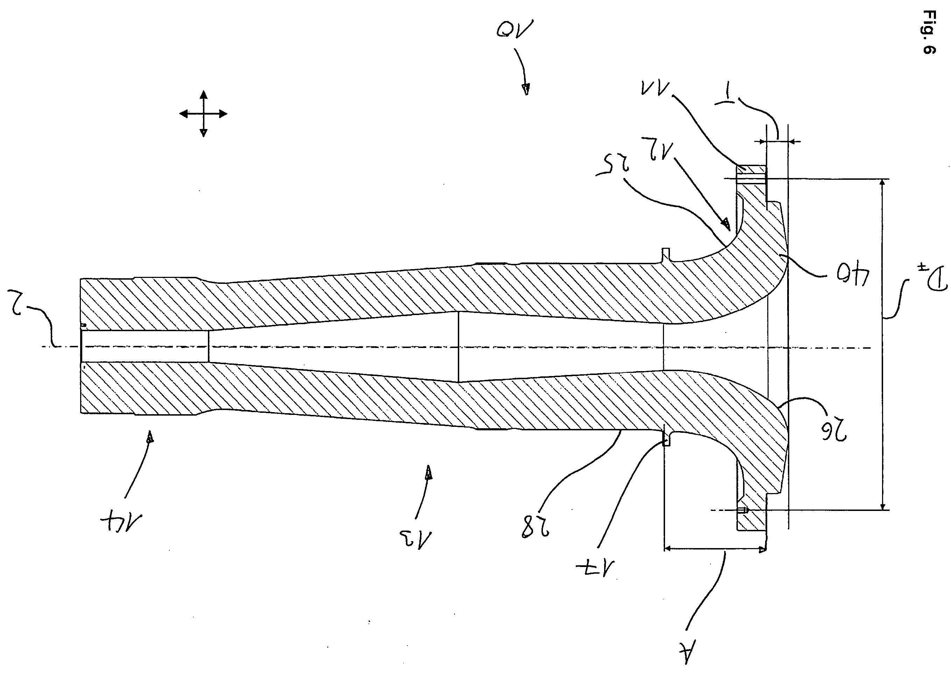

Eine erste Ausführungsform einer erfindungsgemäßen Rotorwelle 1 ist in den Fig. 2, 3 und 4 und eine zweite Ausführungsform einer erfindungsgemäßen Rotorwelle 10 ist in den Fig. 5, 6 und 7 gezeigt. In den Figuren ist die Rotorwelle 1 bzw. 10 mit einer Achse 2 in einer perspektivische Ansicht zu sehen, wobei mit den Pfeilen eine Axialrichtung 3, eine Radialrichtung 4 und eine Schnittebene 5, die von der Radialrichtung 4 und Axialrichtung 3 aufgespannt wird, verdeutlicht wird. Im Folgenden werden Angaben zur Radialrichtung 4, Axialrichtung 3 auf eine Achse 2 der Rotorwellen 1 und 10 bezogen. Übereinstimmende Merkmale der beiden Ausführungsformen werden mit denselben Bezugszeichen bezeichnet, und analog gilt die folgende Beschreibung der ersten Ausführungsform der Rotorwelle 1 auch für die zweite Ausführungsform der Rotorwelle 10.

Mithilfe von Fig. 2 und Fig. 4 bzw. Fig. 5 und Fig. 6 wird die grobe Konstruktion der Rotorwellen 1 und 10 verdeutlicht: Die Rotorwellen 1 und 10 bestehen im Wesentlichen aus einem Schaft 13, welcher auf der einen Seite einen Flansch 11 und auf der gegenüberliegenden Seite einen Abtrieb 14 aufweist. Der Flansch 11 geht über einen Zwischenabschnitt 12 in den Schaft 13 über. Weiterhin mündet der Schaft 13 in dem Abtrieb 14, bzw. das dem Flansch 11 abgewandten Ende des Schafts 13 ist als Abtrieb 14 ausgebildet. Dieser Schaft 13 kann zum Beispiel über eine Kupplung mit einem Getriebe verbunden sein.

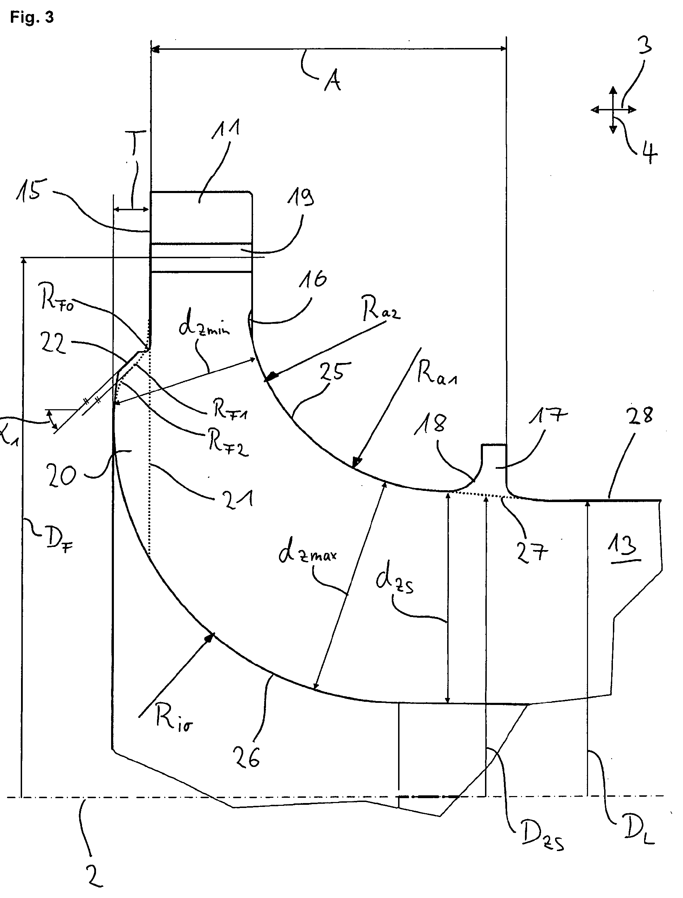

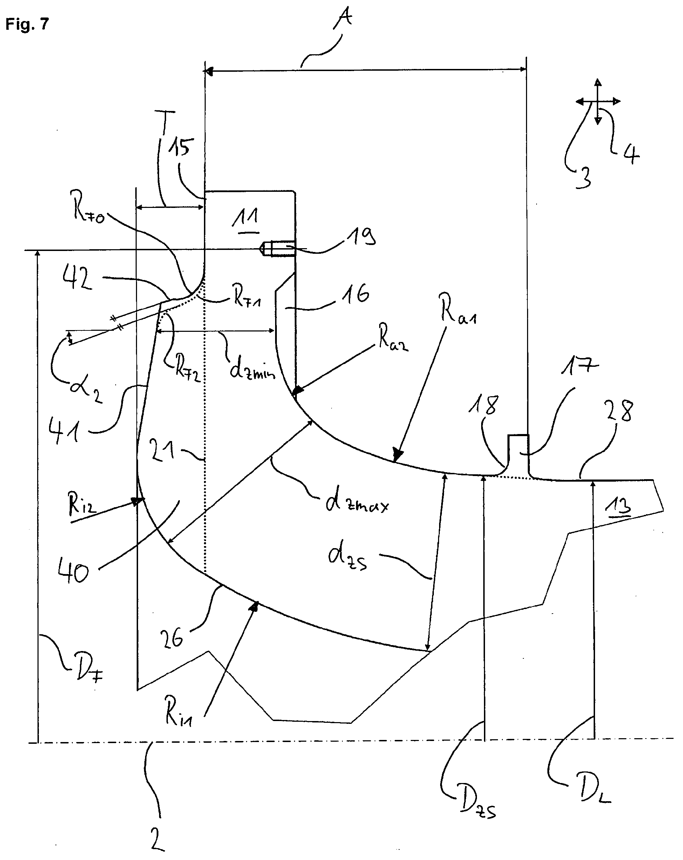

Mithilfe von Fig. 3 und Fig. 7 wird ein detailliertes Bild der Geometrie der Rotorwellen 1 und 10 im Bereich des Flansches 11 und des Zwischenabschnitts 12 gegeben. Der Flansch 11 ist mit einem Lochkreis 19 versehen, an welchem eine Nabe 29 der Windturbine 6 angeschraubt werden kann. Der Durchmesser des Lochkreises 19 wird im Folgenden als Flanschdurchmessers D_{F} bezeichnet.

Direkt an den Flansch 11 grenzt der Zwischenabschnitt 12 an, welcher eine erhöhte Wandstärke aufweist, und somit den Vorsprung 20 bildet. Der Vorsprung 20 in Fig. 3 und der Vorsprung 40 in Fig. 7 sind mit einer gestrichelten Linie 21 angedeutet und weist gegenüber der Flanschfläche 15 des Flansches 11 in Axialrichtung 3 eine Tiefe T auf.

Zwischen dem Vorsprung 20 bzw. 40 und dem Flansch 11 ist eine konusförmige Ringfläche 22 bzw. 42 vorgesehen, welche über einen Radius R_{F0} im die Flanschfläche 15 übergeht. Diese Ringfläche 22 bzw. 42 bewirkt, dass eine ansonsten hervorstehende Ecke eine Versteifung verursachen würde, wodurch wiederum eine Spannungskonzentration entstehen würde. Der Radius R_{F0} ermöglicht eine Spannung reduzierte Krafteinleitung aus dem Flansch 11 in den Vorsprung 20 bzw. 40. In Fig. 3 schließt die konusförmige Ringfläche 22 bzw. 42 mit der Achse 2 der Rotorwelle 1 einen Winkel α₁ von ca. 45° Grad, bzw. einen Winkel α₂ von ca. 20°Grad ein.

Eine alternative Ausführungsform des Übergangs von Vorsprung 20 bzw. 40 in die Flanschfläche 15 wird durch die gestrichelte Linie 23 angedeutet. Diese Ausführungsformen beinhalten, dass ein kontinuierlicher Verlauf z. B. mithilfe von zwei gegenläufigen Radien R_{F1}, R_{F2} zwischen Flanschfläche 15 und Vorsprung 20 bzw. 40 ermöglicht wird, wodurch ein optimaler Kraftfluss gewährleistet wird. Vorzugsweise ist der kontinuierlicher Verlauf der zwei gegenläufigen Radien der Art gewählt, dass an einem Wendepunkt bzw. an einem Übergang der beiden Radien ein Winkel der Oberfläche vorliegt, welcher mit der Achse 2 einen ähnlichen Winkel wie oben beschrieben, insbesondere einen Winkel α₁ von ca. 45° Grad, bzw. einen Winkel α₂ von ca. 20°Grad einschließt.

Wie in Fig. 3 gezeigt, bildet der Vorsprung 20 einen Teil der innen liegenden bzw. stirnseitig liegenden Innenfläche 26, welche kontinuierlich in die Innenfläche des Schafts 13 mündet. Gemäß dieses Ausführungsbeispiels der Rotorwelle 1 weist die Innenfläche 26 bzw. der Vorsprung 20 nur einen durchgehenden Radius Rᵢ₀ auf. Der Radius beschreibt den Verlauf der Kontur der Innenfläche 26 in der Schnittebene 5.

In diesem Ausführungsbeispiel nimmt die Wandstärke - ausgehend von einer Wandstärke d_{zs} des Zwischenabschnitts 12 in der Nähe des Schafts 13 - kontinuierlich bis zu einer geringsten Wandstärke d_{Zmin} vor dem Übergang des Zwischenabschnitts 12 in den Flansch 11 ab.

Gemäß des ersten Ausführungsbeispiels (Fig. 3) und des zweiten Ausführungsbeispiels (Fig. 7) grenzt auf der anderen Seite des Zwischenabschnitts 12 die Außenfläche 25 an den Flansch 11 an, die wirksam gemäß der gestrichelten Linie 27 in die Lagerfläche 28 des Schafts 13 mündet. Dabei ist die Außenfläche 25 mit zwei Radien Rₐ₁, Rₐ₂ versehen, wobei ein erster Radius Rₐ₁ an den Schaft 13 anschließt, und der erste Radius Rₐ₁ in den zweiten Radius Rₐ₂ übergeht, der im Bereich des Flansches 11 angeordnet ist. Vorteilhafterweise ist der erste Radius Rₐ₁ auf der Außenfläche 25 größer als der zweite Radius Rₐ₂. Die Außenfläche 25 geht über eine Hinterschneidung 16 in den Flansch 11 über.

In beiden Ausführungsbeispielen ist an dem Übergang zwischen der Lagerfläche 28 des Schafts 13 und der Außenfläche 25 des Zwischenabschnitts 12 ist ein Anschlag 17 vorgesehen. Dieser Anschlag 17 dient dazu, eine Festlegung der Position der Rotorwellen 1 und 10 in Axialrichtung 2 durch ein nicht dargestelltes Lager zu ermöglichen. Dieser Anschlag 17 überragt im Bereich des Übergangs von dem Zwischenabschnitt 12 in den Schaft 13 die Außenfläche 25 und auch die Lagerfläche 28 in Radialrichtung 3. Dies hat zur Folge, dass der Anschlag 17 im Wesentlichen nicht durch den Kraftfluss aus dem Flansch 11 beaufschlagt ist, und dass die wirksame Geometrie des Übergangs von dem Zwischenabschnitt 12 in den Schaft 13 durch die gestrichelte Linie 27 repräsentiert wird. Der Durchmesser D_{ZS} des zwischen Abschnitts 12 im Bereich der Lagerfläche 28 entspricht also im Wesentlichen dem Durchmesser D_{L} der Lagerfläche 28. Der Anschlag 17 ist über einen Radius 18 mit der Außenfläche 25 verbunden.

Das Ausführungsbeispiel einer Rotorwelle 10 gemäß fig. 7 unterscheidet sich von dem ersten Ausführungsbeispiels vornehmlich durch die Ausprägung des Vorsprungs 40 und die Gestaltung der konusförmige Ringfläche 42. Gemäß dieses Ausführungsbeispiels der Rotorwelle 10 weist die Innenfläche 26 bzw. der Vorsprung 40 zwei ineinander übergehen der Radien Rᵢ₁, Rᵢ₂ auf, wobei der erster Radius Rᵢ₁ im Bereich des Schafts 13 und ein zweiter Radius Rᵢ₂ im Bereich des Flansches 11 angeordnet ist. Der erste Radius Rᵢ₁ ist dabei größer ausgebildet als der zweite Radius Rᵢ₂. Die beiden Radien Rᵢ₁, Rᵢ₂ beschreiben den Verlauf der Kontur der Innenfläche 26 in der Schnittebene 5. Wie in Fig. 7 zu erkennen, ist der Vorsprung 40 der Rotorwelle 10 größer ausgeprägt als der Vorsprung 20 der Rotorwelle 1. Dies ist darin begründet, dass die Rotorwelle 40 für eine größere Windturbine als die der Rotorwelle 1 konzipiert ist. Deshalb müssen größere Belastungen von der Rotorwelle 40 ertragen werden, deshalb eine erhöhte Stützwirkung des vergrößerten Vorsprungs 40 erforderlich ist.

Weiterhin umfasst der Vorsprung 40 einen relativ gradlinigen Abschnitt 41 der Stirnseite, wodurch eine besonders günstige kontinuierliche Verringerung der Wandstärke des Zwischenabschnitts 12 erreicht wird.

Ausgehend von einer Wandstärke d_{zs} des Zwischenabschnitts 12 in der Nähe des Schafts 13 nimmt in diesem Ausführungsbeispiel die Wandstärke in Richtung Vorsprung 40 des Zwischenabschnitts 12 bis zu einer maximalen Wandstärke d_{Zmax} zu. Danach nimmt die Wandstärke kontinuierlich bis zu einer geringsten Wandstärke d_{Zmin} vor dem Übergang des Zwischenabschnitts 12 in den Flansch 11 ab. Dadurch wird erreicht, dass die hohen Querkräfte und Biegemomente, die in den Flansch 11 eingetragen werden, in besonders spannungsarme Weise in den Schaft 13 übergeleitet werden können, und dort Spannungen an der Oberfläche des Schaftes im Wesentlichen abgebaut sind.

Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander kombinierbar.

**Bezugszeichenliste**

| | | | |
|---|---|---|---|
| 1 | Rotorwelle | 40 | Vorsprung |
| 2 | Achse | 41 | Abschnitt |
| 3 | Axialrichtung | 42 | Ringfläche |
| 4 | Radialrichtung | | |
| 5 | Schnittebene | α₁ | Winkel |
| 6 | Windturbine | α₂ | Winkel |
| 7 | Turm | D_{F} | Flanschdurchmesser |
| 8 | Maschinenhaus | D_{L} | Lagerdurchmesser |
| 9 | Rotor | D_{ZS} | Außendurchmesser |
| 10 | Rotorwelle | d_{zs} | Wandstärke |
| 11 | Flansch | d_{Zmax} | Wandstärke |
| 12 | Zwischenabschnitt | d_{Zmin} | Wandstärke |
| 13 | Schaft | d_{zs} | Wandstärke |
| 14 | Abtrieb | T | Tiefe |
| 15 | Flanschfläche | A | Abstand |
| 16 | Hinterschneidung | V_{AT} | Verhältnis |
| 17 | Anschlag | V_{AT} | Verhältnis |
| 18 | Radius | R_{F0} | Radius |
| 19 | Lochkreis | R_{F1} | Radius |
| 20 | Vorsprung | R_{F2} | Radius |
| 21 | Linie | Rᵢ₀ | Radius |
| 22 | Ringfläche | Rᵢ₁ | Radius |
| 23 | Linie | Rᵢ₂ | Radius |
| 24 | | Rₐ₁ | Radius |
| 25 | Außenfläche | Rₐ₁ | Radius |
| 26 | Innenfläche | | |
| 27 | Linie | | |
| 28 | Lagerfläche | | |
| 29 | Nabe | | |
| 30 | Rotorblatt | | |

## Patentansprüche

1. Rotorwelle (1; 10) für eine Windturbine (6), umfassend
- einen Flansch (11) zur Aufnahme einer Nabe (29) eines Rotors (9) der Windturbine (6),
- einen Abtrieb (14) zur Ableitung einer Rotationsbewegung, insbesondere in ein Getriebe,
- einen Schaft (13) und einen Zwischenabschnitt (12),
- wobei der Flansch (11) über den Zwischenabschnitt (12) in den Schaft (13) übergeht
- und der Schaft (13) mit dem Abtrieb (14) verbunden ist,
- wobei die Rotorwelle (1; 10) im Wesentlichen hohl ist,
- und wobei der Schaft (13) auf der Außenfläche eine Lagerfläche (28) zur Abstützung auf einem Hauptlager der Windturbine (6) aufweist,
- wobei die Lagerfläche (28) in einer Axialrichtung (3) mit einem wirksamen Lagerabstand (A) von einer Flanschfläche (15) beabstandet ist und an einem an den Zwischenabschnitt (12) angrenzenden Bereich des Schafts (13) angeordnet ist,
- die Rotorwelle (1; 10) im Wesentlichen aus einem metallischen Gusswerkstoff besteht und
- eine in einer Radialrichtung (4) innen- und stirnseitig liegende Innenfläche (26) und eine außen liegende Außenfläche (25) aufweist,
- wobei die Innenfläche (26) des Zwischenabschnitts (12) in einer durch Radialrichtung (4) und Axialrichtung (3) aufgespannten Schnittebene (6) mit mindestens einem Innenradius (Rᵢ₀; Rᵢ₁, Rᵢ₂) konvex gekrümmt ausgebildet ist,
- die Außenfläche (25) des Zwischenabschnitts (12) in der Schnittebene (6) mit mindestens einem Außenradius (R_{a1,} Rₐ₂) konkav gekrümmt ausgebildet ist,
- die Außenfläche (25) und die Innenfläche (26) des Zwischenabschnitts (12) im Wesentlichen kontinuierlich verlaufend ausgeprägt sind, und
- der Zwischenabschnitt (12) derart geometrisch ausgebildet ist, dass eine maximale Spannung in jedem Punkt der Rotorwelle (1; 10) immer unter der für den Gusswerkstoff definierten Streckgrenze (R_{p, 0,2}) liegt,
- wobei die maximale Spannung mit Hilfe eines zur Zulassung des Rotorwelle (1; 10) angegebenen Lastprofils berechnet ist und
- wobei die Rotorwelle ferner umfasst einen ringsymmetrischen, in Axialrichtung (3) ausgebildeten Vorsprung (20; 40) zum Abstützen des Flansches (11), wobei der Vorsprung (20; 40) an einer dem Abtrieb (14) abgewandten Stirnseite der Rotorwelle (1; 10) an dem Zwischenabschnitt (12) angeordnet ist und einen Teil der kontinuierlich verlaufenden Innenfläche(26) bildet.

2. Rotorwelle (1; 10) nach Anspruch 1, wobei ein Verhältnis (V_{AT}) des Lagerabstand (A) zu einer Tiefe (T) des Vorsprungs (20; 40) zwischen 12 und 4, bevorzugt zwischen 8 und 4, weiter optimiert zwischen 6 und 4,5, und besonders bevorzugt zwischen 5,5 und 4,6 liegt.

3. Rotorwelle (1; 10) nach Anspruch 1 oder 2, wobei der Vorsprung (20; 40) im Wesentlichen kontinuierlich über mindestens einen Radius (R_{F0;} R_{F1,} R_{F2}) in eine Flanschfläche (15) des Flansches (11) übergeht.

4. Rotorwelle (1; 10) nach Anspruch 1, 2 oder 3, wobei der Vorsprung (20; 40) über eine konusförmige Ringfläche (22; 42) in eine Flanschfläche (15) des Flansches (11) übergeht.

5. Rotorwelle (1; 10) nach Anspruch 4, wobei die Ringfläche (22; 42) in der Schnittebene (6) einen Winkel (α₁; α₂) mit einer Achse (2) der Rotorwelle (1; 10) einschließt, welcher zwischen 50° Grad und 20° Grad, bevorzugt zwischen 45° Grad und 25° Grad, und besonders bevorzugt zwischen 40° Grad und 35° Grad liegt.

6. Rotorwelle (1; 10) nach einem der vorangestellten Ansprüche, wobei die konkave Krümmung der Außenfläche (25) zwei oder mehrere Außenradien (Rₐ₁, Rₐ₂) aufweist, wobei ein erster Radius (Rₐ₁) auf der Außenfläche (25) in der Nähe der Lagerfläche (28) und ein zweiter Radius (Rₐ₂) auf der Außenfläche (25) in mittelbarer Nähe des Flansches (11) angeordnet ist, wobei der erster Radius (Rₐ₁) größer als der zweite Radius (Rₐ₂) ist.

7. Rotorwelle (10) nach einem der vorangestellten Ansprüche, wobei die konvexe Krümmung der Innenfläche (26) zwei oder mehrere Innenradien (R_{i1,} Rᵢ₂) umfasst, wobei ein erster Innenradius (Rᵢ₁) im Wesentlichen auf Innenfläche (26) in einem Bereich angeordnet ist, der mit einem Bereich der in Radialrichtung (4) außen liegenden Lagerfläche (28) korrespondiert, und ein zweiter Innenradius (Rᵢ₂) auf einer Stirnseite der Innenfläche (26) angeordnet ist, wobei der erster Innenradius (Rᵢ₁) größer als der zweite Innenradius (Rᵢ₂) ist.

8. Rotorwelle (1; 10) nach einem der vorangestellten Ansprüche, wobei eine Wandstärke des Zwischenabschnitts (12) ausgehend von einer maximalen Wandstärke (d**_{Zmax}**) bis zu einer minimalen Wandstärke (d_{FZmin}) am Übergang von Zwischenabschnitt (12) in den Flansch (11) im Wesentlichen kontinuierlich abnimmt.

9. Rotorwelle (10) nach Anspruch 8, wobei eine Wandstärke des Zwischenabschnitts () ausgehend von einer Wandstärke (d_{ZS}) am Übergang von dem Schaft (13) in den Zwischenabschnitt (12) zuerst bis auf die maximale Wandstärke (d_{Zmax}) im Wesentlichen kontinuierlich zunimmt, und dann bis zu einer minimalen Wandstärke (d_{FZmin}) am Übergang von Zwischenabschnitt (12) in den Flansch (11) im Wesentlichen abnimmt.

10. Rotorwelle (1; 10) nach einem der vorangestellten Ansprüche, wobei die Innenfläche (26) und die Außenfläche (25) derart im Wesentlichen parallel verlaufend ausgebildet sind, so dass der Zwischenabschnitt (12) mittels geeigneter Schall-Prüfverfahren hinsichtlich Materialfehler untersuchbar ist.

11. Rotorwelle (1; 10) nach einem der vorangestellten Ansprüche, wobei ein wirksamer Außendurchmesser (D_{zs}) der Außenfläche (25) des Zwischenabschnitts (12) an einem an den Zwischenabschnitt (12) angrenzenden Bereich des Schafts (13) im Wesentlichen dem Lagerdurchmesser (D_{L}) entspricht oder nur leicht übertrifft.

12. Rotorwelle (1; 10) nach Anspruch 11, wobei auf der Außenfläche (25) des Zwischenabschnitts (12) und direkt an der Lagerfläche (28) ein ringsymmetrischer axial wirksamer Anschlag (17) für ein Lager vorgesehen ist, welcher in Radialrichtung (4) über den wirksamen Außendurchmesser (D_{zs}) der Außenfläche (25) herausragt.

13. Rotorwelle (1; 10) nach einem der vorangestellten Ansprüche, wobei ein Verhältnis (V_{FA}) des Flanschdurchmessers (D_{F}) zum Lagerabstand (A) zwischen 4,5 und 2,5, bevorzugt zwischen 4 und 3, und besonders bevorzugt zwischen 3,3 und ca. 3,1 liegt.

14. Windturbine (6) mit einem Turm (7), einem darauf drehbar gelagerten Maschinenhaus (8) und einem Rotor (9), wobei in dem Maschinenhaus (8) ein Generator durch den Rotor (9) antreibbar vorgesehen ist, sowie einer Rotorwelle (1; 10) nach einem oder mehreren der voran gestellten Ansprüche, wobei der Rotor (9) mit der Rotorwelle (1; 10) verbunden ist und drehbar in dem Maschinenhaus (8) gelagert ist.

## Claims

1. Rotor shaft (1; 10) for a wind turbine (6), comprising
- a flange (11) for acceptance of a hub (29) of a rotor (9) of a wind turbine (6),
- an output side (14) for the derivation of a rotation movement, especially into a gear box,
- a shaft (13) and an intermediate section (12),
- in which the flange (11) passes over the intermediate section (12) into the shaft (13)
- and the shaft (13) is connected with the output side (14),
- in which the rotor shaft (1; 10) is substantially hollow,
- and in which the shaft (13) comprises a bearing surface (28) on the outer surface for the support on a main bearing of the wind turbine (6),
- in which the bearing surface (28) is spaced apart in an axial direction (3) with an effective bearing clearance (A) from the flange surface (15) and arranged on an area of the shaft (13) bordering the intermediate section (12),
- the rotor shaft (1; 10) substantially consists of a metallic casting material and
- features an inner surface (26) located inside and frontally in one radial direction (4) and one outer surface (25) located outside,
- in which the inner surface (26) of the intermediate section (12) is designed convexly curved in one section plane (6) defined by a radial direction (4) and axial direction (3) with at least one inner radius (Rᵢ₀; Rᵢ₁, Rᵢ₂),
- the outer section (25) of the intermediate section (12) in the section plane (6) is formed concavely curved with at least one outer radius (Rₐ₁, Rₐ₂),
- the outer section (25) and the inner section (26) of the intermediate section (12) are substantially designed continuously proceeding, and
- the intermediate section (12) is geometrically formed in a way that a maximum tension at each point of the rotor shaft (1; 10) always lies under the yield strength (R_{p, 0},₂) defined for the casting material,
- in which the maximum tension is calculated with the help of a load profile stated for the permission of the rotor shaft (1; 10) and
- in which the rotor shaft furthermore comprises a ring symmetrically in axial direction (3) formed protrusion (20; 40) for the support of the flange (11), whereas the protrusion (20; 40) is located on a front side of the rotor shaft (1; 10) away from the output on the intermediate section (12) and forms part of the inner section (26).

2. Rotor shaft (1; 10) according to claim 1, whereat a ratio (V_{AT}) of the bearing clearance (A) to the depth (T) of the protrusion (20; 40) lies between 12 and 4, preferably between 8 and 4, further optimized between 6 and 4,5, and especially preferably between 5,5 and 4,6.

3. Rotor shaft (1; 10) according to claim 1 or 2, whereat the protrusion (20; 40) passes substantially continuously over at least one radius (R_{F0;} R_{F1}, R_{F2}) into a flange surface (15) of the flange (11).

4. Rotor shaft (1; 10) according to claim 1, 2 or 3, whereat the protrusion (20; 40) passes over a conical annular surface (22; 42) into a flange surface (15) of the flange (11).

5. Rotor shaft (1; 10) according to claim 4, whereat the annular surface (22; 42) in the section plane (6) comprises an angle (α₁; α₂) with an axis (2) of the rotor shaft (1; 10) which lies between 50° degrees and 20° degrees, preferably between 45° degrees and 25° degrees and especially preferably between 40° degrees and 35° degrees.

6. Rotor shaft (1; 10) according to one of the preceding claims, whereat the concave curvature of the outer surface (25) comprises two or more outer radii (Rₐ₁, Rₐ₂), whereat the first radius (Rₐ₁) is arranged on the outer surface (25) near the bearing surface (28) and the second radius (Rₐ₂) is arranged on the outer surface (25) indirectly near the flange (11), whereat the first radius (Rₐ₁) is higher than the second radius (Rₐ₂).

7. Rotor shaft (10) according to one of the preceding claims, whereat the convex curvature of the inner surface (26) comprises two or more inner radii (Rᵢ₁, Rᵢ₂), whereat a first inner radius (Rᵢ₁) is substantially arranged on the inner surface (26) in a section corresponding with a section of the bearing surface (28) lying outwards in radial direction (4), and a second inner radius (Rᵢ₂) arranged on the front side of the inner surface (26), whereat the first inner radius (Rᵢ₁) is higher than the second inner radius (Rᵢ₂).

8. Rotor shaft (1; 10) according to one of the preceding claims, whereat a wall thickness of the intermediate section continuously decreases essentially (12) based on a maximum wall thickness (d_{Zmax}) until a minimum wall thickness (d_{FZmin}) at the transition from the intermediate section (12) into the flange (11).

9. Rotor shaft (10) according to claim 8, whereat a wall thickness of the intermediate section (12) based on a wall thickness (d_{ZS}) at the transition from the shaft (13) into the intermediate section (12) first continuously increases essentially until the maximum wall thickness (d_{Zmax}), and then decreases essentially until a minimum wall thickness (d_{FZmin}) at the transition from the intermediate section (12) into the flange (11).

10. Rotor shaft (1; 10) according to one of the preceding claims, whereat the inner surface (26) and the outer surface (25) are essentially arranged running parallel so that the intermediate section (12) is examinable by means of suitable sound test methods regarding material faults.

11. Rotor shaft (1; 10) according to one of the preceding claims, whereat an effective outer diameter (D_{zs}) of the outer surface (25) of the intermediate section (12) on an area of the shaft (13) bordering the intermediate section (12) corresponds to or only slightly exceeds the bearing diameter (D_{L}).

12. Rotor shaft (1; 10) according to claim 11, whereat an annular symmetrical axially effective arrester (17) for a bearing is provided on the outer surface (25) of the intermediate section (12) and directly on the bearing surface (28) which continues in radial direction (4) over the effective outer diameter (D_{zs}) of the outer surface (25).

13. Rotor shaft (1; 10) according to one of the preceding claims, whereat a ratio (V_{FA}) of the flange diameter (D_{F}) to the bearing clearance (A) lies between 4.05 und 2.5, preferably between 4 and 3, and especially preferably between 3.3 and ca. 3.1.

14. Wind turbine (6) with a tower (7), a nacelle (8) rotatably mounted on the tower and a rotor (9), whereat a generator is provided in the nacelle (8) capable of being driven by the rotor (9) as well as a rotor shaft (1; 10) according to one or more of the preceding claims, whereat the rotor (9) is connected with the rotor shaft (1; 10) and rotatably mounted in the nacelle (8).

## Revendications

1. Un arbre principal d'entrainement du rotor (1; 10) d'une éolienne (6), comprenant
- une bride (11) pour connecter le moyeu (29) du rotor (9) de l'éolienne (6),
- un coté de sortie (14) pour transmettre le mouvement de rotation spécialement à la boite de vitesse,
- un arbre (13) et une section intermédiaire (12),
- où la bride (11) est située au-dessus de la section intermédiaire (12) de l'arbre (13)
- et où l'arbre (13) est lié dans sa continuité au côté de sortie (14),
- où l'arbre principal d'entrainement (1; 10) est fondamentalement creux,
- où l'arbre (13) a une surface pour le roulement (28) sur la surface extérieure pour le support d'un roulement principal de l'éolienne (6),
- où la surface pour le roulement (28) est écartée dans la direction axiale (3) avec un jeu de roulement effectif (A) depuis la surface de la bride (15) et situé sur la surface de l'arbre (13) bordant la section intermédiaire (12),
**caractérisé en ce que**:
- l'arbre principal d'entrainement du rotor (1; 10) est constitué essentiellement d'une matière métallique de fonderie et
- à une surface intérieure (26) située à l'intérieure et frontalement dans une direction axiale (4) et a une surface extérieure (25) située à l'extérieur,
- où la surface intérieure (26) de la section intermédiaire (12) est conçue d'une forme courbe convexe à partir du plan de coupe (6) définie par une direction radiale (4) et une direction axiale (3) avec au moins un rayon intérieur (Rᵢ₀; Rᵢ₁, Rᵢ₂),
- la section extérieure (25) de la section intermédiaire (12) dans le plan de coupe (6) est de forme courbe concave avec au moins un rayon externe (Rₐ₁, Rₐ₂),
- la section externe (25) et la section interne (26) de la section intermédiaire (12) soient essentiellement conçues dans le prolongement sans interruption prononcée.
- la section intermédiaire (12) est géométriquement formée d'une telle façon que la limite d'élasticité à chaque point de l'arbre principal d'entrainement du rotor (1; 10) soit toujours sous la limite d'élasticité (Rₚ, ₀,₂) définie pour le matériau de fonderie.
- dans lequel la limite d'élasticité est calculée à l'aide du profil de charge mentionné dans le certificat de l'arbre principal d'entrainement du rotor (1 ; 10) et
- dans lequel l'arbre comprend aussi un anneau symétrique dans la direction axiale (3) formant une saillie (20; 40) pour supporter la bride (11), où la saillie (20; 40) est situé sur le l'avant de l'arbre principale d'entrainement du rotor (1; 10) loin de la sortie sur la section intermédiaire (12) et fait partie de la section intérieure (26).

2. Arbre principal d'entrainement du rotor (1; 10) selon la revendication 1, selon laquelle le rapport (Vat) du jeu de roulement effectif (A) à la profondeur (T) de la saillie (20; 40) est compris entre 12 et 4, de préférence entre 8 et 4, optimisé d'autant plus entre 6 et 4,5, et spécialement préféré entre 5,5 et 4,6.

3. Arbre principal d'entrainement du rotor (1; 10) selon la revendication 1 ou 2, où la saillie (20; 40) passe essentiellement de manière continue sur au moins un rayon (RF0; RF1, RF2) jusqu'à la surface de la bride (15) de la bride (11).

4. Arbre principal d'entrainement du rotor (1; 10) selon la revendication 1,2 ou 3, où la saillie (20; 40) passe au-dessus d'une surface conique annulaire (22; 42) à la surface de la bride (15) de la bride (11).

5. Arbre principal d'entrainement du rotor (1; 10) selon la revendication 4, où la surface annulaire (22; 42) dans le plan de coupe (6) comporte un angle (α1, α2) avec l'axe (2) de l'arbre principal d'entrainement du rotor (1 10) qui se situe entre 50° et 20° degrés, de préférence entre 45° et 25° degrés et préféré particulièrement entre 40° et 35° degrés.

6. Arbre principal d'entrainement du rotor (1; 10) selon l'une quelconque des revendications précédentes, où la courbure concave de la surface extérieure (25) comprend deux ou plusieurs rayons extérieurs (Rₐ₁, Rₐ₂), où le premier rayon ((Rₐ₁) est disposé sur la surface extérieure (25) à proximité de la surface d'appui (28) et où le deuxième rayon (Rₐ₂) est disposé sur la surface extérieure (25) de manière indirecte à proximité de la bride (11), où le premier rayon (Rₐ₁) est supérieur au deuxième rayon (Rₐ₂).

7. Arbre principal d'entrainement du rotor (1, 10) selon l'une quelconque des revendications précédentes, où la courbure convexe de la surface intérieure (26) comprend deux ou plusieurs rayons intérieurs (Rᵢ₁, Rᵢ₂), où le premier rayon interne (Rᵢ₁) est disposé essentiellement sur la surface intérieure (26) dans une section qui correspond à une partie de la surface d'appui (28) se trouvant vers l'extérieur dans le sens radial (4), et un deuxième rayon intérieur (Rᵢ₂2) disposé sur le côté avant de la surface intérieure (26), ou le premier rayon interne (Rᵢ₁) est supérieur au second rayon interne (Rᵢ₂).

8. Arbre principal d'entrainement du rotor (1; 10) selon l'une quelconque des revendications précédentes, où l'épaisseur de la paroi de la section intermédiaire (12) diminue essentiellement de façon continue basée sur une épaisseur de paroi maximale (d_{Zmax}) jusqu'à l'épaisseur de paroi minimale (d_{FZmin}) a la transition entre la section intermédiaire (12) et la bride (11).

9. Arbre principal d'entrainement du rotor (1, 10) selon la revendication 8, où l'épaisseur de paroi de la section intermédiaire (12) basée sur une épaisseur de paroi (d_{ZS}) à la transition entre l'arbre (13) et la partie intermédiaire (12) augmente d'abord de façon continue essentiellement jusqu'à atteindre l'épaisseur de paroi maximale (d_{Zmax}), puis diminue sensiblement jusqu'à ce que l'épaisseur de paroi minimale (d_{FZmin}) à la transition de la section intermédiaire (12) à la bride (11).

10. Arbre principal d'entrainement du rotor (1; 10) selon l'une quelconque des revendications précédente, où la surface intérieure (26) et la surface extérieure (25) soient disposées essentiellement parallèlement de manière à ce que la section intermédiaire (12) soit examinable par le moyen de méthodes d'essai sonores appropriées pour détecter les défauts des matériaux.

11. Arbre principal d'entrainement du rotor (1; 10) selon l'une quelconque des revendications précédentes, où le diamètre extérieur effectif (D_{zs}) de la surface extérieure (25) de la section intermédiaire (12) sur la zone de l'arbre (13) délimitant la section intermédiaire (12) corresponde à ou dépasse légèrement le diamètre de palier (D_{L}).

12. Arbre principal d'entrainement du rotor (1; 10) selon la revendication 11, où une butée annulaire symétrique d'arrêt axial effective (17) pour un roulement est prévue sur la surface extérieure (25) de la section intermédiaire (12) et directement sur la surface d'appui (28) qui se poursuit dans la direction radial (4) sur le diamètre externe effectif (D_{zs}) de la surface extérieure (25).

13. Arbre principal d'entrainement du rotor (1; 10) selon les revendications précédentes, où un rapport (V_{FA}), du diamètre de la bride (D_{F}) à la distance d'appui (A) se situe entre 4,05 et 2,5, de préférence entre 4 et 3, et particulièrement préférée entre 3,3 et environ 3.1.

14. Eolienne (6) avec une tour (7), une nacelle (8) montée de manière rotative sur la tour et un rotor (9), où la nacelle (8) est pourvue d'un générateur (8) susceptible d'être entraîné par le rotor (9) ainsi que d'un arbre principal d'entrainement du rotor (1; 10) selon l'une ou plusieurs des revendications précédentes, où le rotor (9) est relié à l'un arbre principal d'entrainement du rotor (1; 10) et monté de manière rotative dans la nacelle (8).
